# EUROPÄISCHE PATENTANMELDUNG

(11) **EP 4 316 744 A1**
(43) Veröffentlichungstag der Anmeldung: **07.02.2024**
(21) Anmeldenummer: 22203847.3
(22) Anmeldetag: 26.10.2022
(51) Int. Cl.: B25J 11/00, B25J 15/04, B25J 19/00

(54) **BAUROBOTER MIT WECHSELSCHNITTSTELLE MIT EINER SPULE SOWIE WERKZEUG FÜR DEN BAUROBOTER**

(30) Priorität: 03.08.2022 EP 22188419
(71) Anmelder: Hilti Aktiengesellschaft, 9494 Schaan (LI)
(72) Erfinder: Hurka, Florian, 86459 Margertshausen (DE); Britz, Rory, 82319 Starnberg (DE); Nitzschner, Michael, 86156 Augsburg (DE); Hartmann, Markus, 87665 Mauerstetten (DE); Fürfanger, Georg, 81373 München (DE); Koscheck, David, 86899 Landsberg (DE); Brugger, Peter, 6800 Feldkirch (AT); Schmid, Tobias, 86875 Emmenhausen (DE)
(74) Vertreter: Hilti Aktiengesellschaft Corporate Intellectual Property

(57) **Zusammenfassung**

Die Erfindung betrifft einen **Bauroboter (10),** umfassend eine Wechselschnittstelle (21) zur lösbaren Verbindung mit einem Werkzeug (24). Um typischen Umgebungsbedingungen einer Baustelle Stand halten zu können, weist die Wechselschnittstelle (21) wenigstens eine Spule (46) zur drahtlosen Übertragung von Betriebsenergie an das Werkzeug (24) auf. Weiter betrifft die Erfindung auch ein Werkzeug (24), das mit einem solchen Bauroboter (10) verwendbar ist.

## Beschreibung

Die Erfindung betrifft einen Bauroboter, an den ein Werkzeug anschließbar ist.

Um die vom Bauroboter zu verwendenden Werkzeuge zu wechseln, kann der Bauroboter eine Wechselschnittstelle aufweisen. Die Wechselschnittstelle sollte eine stabile Anordnung des Werkzeugs mit dem Bauroboter ermöglichen.

Der Bauroboter sollte das Werkzeug gegebenenfalls mit notwendiger Betriebsenergie versorgen.

Bei im Bau verwendeten Werkzeugen ist im Betrieb häufig mit erheblichen Vibrationen zu rechnen. Trotz der Vibrationen sollte der Bauroboter in der Lage sein, das Werkzeug mit hinreichender Genauigkeit in einer jeweiligen Position und Lage zu halten. Es sollte verhindert werden, dass der Bauroboter durch die Vibrationen beschädigt wird. Zumindest sollten derartige Beschädigungen auf ein Minimum begrenzt sein.

Typischerweise ist auf Baustellen auch mit erheblichen Aufkommen an Staub, Schmutz, Feuchtigkeit oder dergleichen zu rechnen. Es besteht die Gefahr, dass diese in den Bereich der Wechselschnittstelle gelangen. Dies kann die Übertragung der Betriebsenergie über die Wechselschnittstelle behindern oder gar gänzlich unterbrechen. Bei Eindringen von Feuchtigkeit besteht beispielsweise die Gefahr eines Kurzschlusses und / oder von Funkenschlag.

Aufgabe der vorliegenden Erfindung ist es daher, einen Bauroboter anzubieten, an den unterschiedliche Werkzeuge sicher anschließbar sind, sodass insbesondere Betriebsenergie sicher zum angeschlossenen Werkzeug übertragen werden kann. Auch soll ein sicher an einen solchen Bauroboter anschließbares Werkzeug vorgestellt werden.

Gelöst wird die Aufgabe durch einen **Bauroboter,** insbesondere zur Ausführung von Bauarbeiten im Hochbau, Tiefbau und / oder Stahlbau, umfassend eine Wechselschnittstelle zur lösbaren Verbindung mit einem Werkzeug, wobei die Wechselschnittstelle wenigstens eine Spule zur drahtlosen Übertragung von Betriebsenergie an das Werkzeug aufweist.

Unter Betriebsenergie kann dabei Energie verstanden werden, die zur Ausführung einer Hauptfunktion des Werkzeugs vom Werkzeug benötigt wird. Die Betriebsenergie kann insbesondere mit einer höheren Leistung übertragen werden als die für eine Übertragung von Daten oder Signalen vom Werkzeug zum Bauroboter oder umgekehrt erforderlich ist. Die Leistung, mit der die Betriebsenergie übertragen wird und / oder übertragbar ist, kann beispielsweise mindestens 100 W betragen.

Bei dem Werkzeug kann es sich um eine Werkzeugmaschine handeln. Das Werkzeug, insbesondere die Werkzeugmaschine, kann auch für eine manuelle Verwendung durch einen Benutzer des Werkzeugs bzw. der Werkzeugmaschine eingerichtet sein. Das Werkzeug kann beispielsweise einen Handgriff aufweisen. Beispielsweise kann es sich um eine Steinbohrwerkzeugmaschine, eine Steinmeißelwerkzeugmaschine, ein Setzgerät, insbesondere zum Setzen von Nägeln, Schrauben und / oder Dübeln in ein Gestein, einer Trennwerkzeugmaschine, beispielsweise einer Steinsägewerkzeugmaschine, einer Schleifwerkzeugmaschine, beispielsweise einer Steinschleifwerkzeugmaschine, oder eine Presswerkzeugmaschine handeln.

Die Wechselschnittstelle kann zur Übertragung einer Dauerleistung von mindestens 100 W, besonders bevorzugt von mindestens 1 kW, und vorzugsweise von höchstens 7 kW, beispielsweise höchstens 6,6 kW, eingerichtet sein. Die Dauerleistung kann einer durchschnittlichen Leistung gemittelt über mindestens 1 Minute, beispielsweise über 10 Minuten, entsprechen. Somit können Leistungen übertragbar sein, die einen Einsatz von Hochleistungswerkzeugen zur Bearbeitung von Gestein, insbesondere Beton oder Stahlbeton, und / oder Stahl, ermöglichen.

Die Wechselschnittstelle kann allgemein eingerichtet sein, die Betriebsenergie in Form eines elektrischen Wechselstroms zu übertragen.

Insbesondere kann sie zur Übertragung der Betriebsenergie bei einer Übertragungsfrequenz von mindestens 1 kHz, insbesondere von mindestens 100 kHz, eingerichtet sein. Durch Nutzung einer höheren Übertragungsfrequenz können Materialanforderungen an die Wechselschnittstelle minimiert werden. Beispielsweise kann bei induktiver Übertragung der Betriebsenergie mit steigender Übertragungsfrequenz ein Kern der Spule kleiner dimensionierbar sein. Auch lässt sich die Leistungsdichte der Spule erhöhen. Die Wechselschnittstelle, insbesondere die Spule, können kleiner ausgelegt werden. Vorzugsweise kann die Spule auch mehrere Kerne aufweisen.

Weist der Bauroboter, insbesondere die Wechselschnittstelle, wenigstens einen GaN-Schalter, beispielsweise einen Galliumnitrid-basierten Transistor, auf, so kann besonders schnell geschaltet werden, sodass hohe Übertragungsfrequenzen verwendet werden können. Beispielsweise lassen sich mit GaN-Schaltern Übertragungsfrequenzen von mindestens 10 kHz, insbesondere von mindestens 100 kHz, erreichen. Somit kann noch kleiner gebaut werden. Auch lassen sich Übertragungsverluste minimieren.

Bei besonders robusten Ausführungsbeispielen kann die Spule wasser- und / oder staubdicht verpackt sein. Sie kann beispielsweise in ein Vergussmaterial eingegossen sein. Sie kann mindestens einem Schutzstandard entsprechen, wie er üblicherweise mit IP44, insbesondere mindestens mit IP66, bezeichnet wird.

Die Wechselschnittstelle kann einen Vibrationsdämpfer aufweisen, der eingerichtet ist, Vibrationen des an der Wechselschnittstelle angeordneten Werkzeugs zum übrigen Bauroboter hin, insbesondere um mindestens 3 dB, also mindestens auf die Hälfte, zu reduzieren. Der Vibrationsdämpfer kann eine Schicht eines vibrationsdämpfendes Materials aufweisen. Das vibrationsdämpfende Material kann, zumindest im Wesentlichen, elastisch und / oder plastisch verformbar sein. Alternativ oder ergänzend kann der Vibrationsdämpfer auch auf einem elektrischen und / oder einem magnetischen Feld basieren.

Die Spule kann eingerichtet sein, den Vibrationsdämpfer oder zumindest einen Teil des Vibrationsdämpfers zu bilden.

Insbesondere kann die Wechselschnittstelle eingerichtet sein, die Spule mit einer Gleichstromkomponente zu betreiben. Unter einer Gleichstromkomponente kann eine elektrische Stromkomponente mit einer Frequenz erheblich unterhalb einer üblichen Netzfrequenz, beispielsweise höchstens von 10 Hz, insbesondere höchstens von 1 Hz, verstanden werden. Somit kann die Spule ein konstantes oder zumindest nur langsam veränderliches Magnetfeld erzeugen. Das Magnetfeld kann dann einen Teil des Vibrationsdämpfers bilden.

Wird die Gleichstromkomponente an die Spule angelegt, so kann dies eine Rückstellkraft erzeugen, welche die Tendenz zeigt, einen ferromagnetischen und / oder permanentmagnetischen Kern in die Mitte der Spule zu ziehen. Diese Rückstellkraft kann somit einer Verschiebung aus einer Mittenposition entgegenwirken. Eine initiale Ruheposition kann auch außerhalb eines Kraft-Nullpunkts liegen. So ist auch eine Verschiebung und / oder Vorspannung denkbar.

Die Stärke der Rückstellkraft kann durch Ändern der Gleichstromkomponente variiert werden.

Somit kann eine Art eines Federelements ausbildbar sein, mit welchem eine Übertragungsfunktion für Vibrationen des Kerns adaptiert werden kann. Somit können auf den übrigen Bauroboter übertragene Vibrationen minimiert werden. Insbesondere ist eine weitgehende, insbesondere, zumindest im Wesentlichen, vollständige, Auslöschung von übertragenen Vibrationen denkbar.

Ist die Wechselschnittstelle eingerichtet, die Spule gleichzeitig mit einer Gleichstromkomponente und einer Wechselstromkomponente zu betreiben, so kann die Spule sowohl zur Übertragung der Betriebsenergie als auch als Teil des Vibrationsdämpfers nutzbar sein. Die Wechselstromkomponente kann dabei eine Wechselfrequenz beispielsweise von mindestens der üblichen Netzfrequenz, beispielsweise mindestens 50 Hz oder mindestens 60 Hz, aufweisen. Bevorzugt kann sie auch eine höhere Frequenz, beispielsweise entsprechend der vorangehend genannten Übertragungsfrequenz, insbesondere von mindestens 10 kHz, beispielsweise mindestens 100 kHz, aufweisen.

Die Wechselschnittstelle kann eingerichtet ist, über die Spule drahtlos sowohl die Betriebsenergie als auch Daten zu übertragen. Dazu kann die Übertragungsfrequenz amplituden- und / oder frequenzmoduliert werden. Alternativ oder ergänzend kann zur Datenübertragung ein nicht-sinusoidales Signal zu der Übertragungsfrequenz hinzugefügt werden.

Die zu übertragenden Daten können beispielsweise Eigenschaften und / oder Betriebsparameter des Werkzeugs, beispielsweise eine erforderliche, bereitzustellende Leistung, eine Art des Werkzeugs, einen Zustand des Werkzeugs oder dergleichen, betreffen. Denkbar ist auch, dass die zu übertragenden Daten Eigenschaften und / oder Betriebsparameter des Bauroboters und / oder Eigenschaften einer Bauaufgabe, beispielsweise eine bereitstellbare Leistung, eine Art des Bauroboters, einen Zustand des Bauroboters, ein Maß, beispielsweise eine Tiefe oder ein Durchmesser eines zu bohrenden Bohrlochs oder ein zu erreichender Glättungsgrad einer zu schleifenden Oberfläche, einen Zustand einer ausgeführten Bauaufgabe, beispielsweise eine erreichte Tiefe oder ein Qualitätsmerkmal der ausgeführten Bauaufgabe, betreffen. Die Daten können auch Steuersignale zur Steuerung des Werkzeugs und / oder des Bauroboters umfassen.

Auch ist denkbar, dass an der Wechselschnittstelle ein Permanentmagnet angeordnet ist. Der Permanentmagnet kann als Gegenmagnet zur Spule, insbesondere, wenn diese mit einer Gleichstromkomponente betrieben wird, fungieren. Auch der Permanentmagnet kann ein Teil des Vibrationsdämpfers sein.

Der Bauroboter kann einen Manipulator aufweisen. Der Manipulator kann einen mehrachsigen Arm, beispielsweise mit wenigstens drei, vorzugsweise wenigstens sechs Freiheitsgraden, aufweisen. Zur Vergrößerung der Reichweite kann der Bauroboter eine Hubvorrichtung aufweisen.

An einem Endeffektor des Manipulators kann sich die Wechselschnittstelle befinden.
Der Bauroboter kann zur Ausführung von Bauarbeiten auf einer Hochbau-Baustelle, einer Tiefbau-Baustelle und / oder einer Stahlbau-Baustelle, beispielsweise einer Ölbohrplattform, ausgebildet sein.

Er kann zur Ausführung von Bauarbeiten an einer Decke, einer Wand und / oder einem Boden eingerichtet sein. Er kann zum Markieren, Bohren, Trennen, Meißeln, Schleifen und / oder Setzen eines Bauelements ausgebildet sein.

Der Bauroboter kann auch eine mobile Plattform aufweisen. Die mobile Plattform kann ein Räderfahrwerk und / oder ein Kettenfahrwerk umfassen. Die mobile Plattform kann wenigstens zwei Freiheitsgrade aufweisen. Es kann sich auch um eine Flugplattform handeln. Der Bauroboter kann insgesamt wenigstens zehn Freiheitsgrade aufweisen.

Der Bauroboter kann eine Steuerung aufweisen. Die Steuerung kann als Computer ausgebildet sein. Sie kann einen Prozessor, einen Speicherbaustein und / oder einen auf dem Prozessor ausführbaren Programmcode aufweisen. Der Prozessor kann ein oder mehrere Unterprozessoren aufweisen. Der Programmcode kann eingerichtet sein, bei Ausführung auf der Steuerung ein an der Wechselschnittstelle angeordnetes Werkzeug zu betreiben.

Die Wechselstromkomponente kann aus unterschiedlichen Quellen gespeist werden. So ist z.B. eine Speisung aus einer Netzversorgung mittels eines AC/AC-Wandlers und / oder eine Speisung aus einem wiederaufladbaren Gleichspannungsspeicher, beispielsweise einem Akkumulator wie einer zylindrischen Zelle oder einer Pouchzelle, einem Superkondensator und / oder einem Kondensator, beispielsweise einem Elektrolytkondensator, mittels eines DC/AC-Wandlers denkbar. Falls ein Hochfrequenznetz bereits anderweitig vor Ort verfügbar ist, kann auch dieses verwendet werden. Denkbar ist, auch verschiedene Quellen zu kombinieren. So ist es denkbar, ein Netz zu nutzen, das a priori keine ausreichende, kurzzeitige Spitzenleistung bereitstellen kann. Insbesondere ist denkbar, eine Spitzenlast durch wenigstens einen Akkumulator zu puffern. Der wiederaufladbare Gleichspannungsspeicher kann in einer oder mehreren nachfolgenden Schwachlastphasen wieder aufgeladen werden. Der wiederaufladbare Speicher kann sich im Werkzeug und / oder im Bauroboter, beispielsweise im Bereich der mobilen Plattform und / oder in der Wechselschnittstelle, befinden.

Ausgangsseitig sind ebenfalls verschiedene Nutzfälle denkbar. Bei niedrigen Übertragungsfrequenzen ist denkbar, dass das Werkzeug eine Asynchronmaschine aufweist. Die Asynchronmaschine kann dann direkt mit der vom Werkzeug empfangenen Wechselspannung betrieben werden.

Bei höheren Übertragungsfrequenzen lässt sich die empfangene Wechselspannung sehr einfach gleichrichten. Insbesondere können bereits kleine Siebkapazitäten und / oder induktive Glättungsglieder ausreichen.

Bei einer weiteren Ausführungsform kann vorgesehen sein, dass der Vibrationsdämpfer mehrere Spulen, durch mehrere Induktionsspulen und / oder durch mehrere Permanentmagnete umfasst.

Die Spulen, Induktionsspulen und / oder Permanentmagnete können nach Art eines Linearantriebs in einer Reihe, insbesondere gleichmäßig voneinander beabstandet, angeordnet sein.

Denkbar ist ferner, dass der Vibrationsdämpfer am Manipulator und / oder zwischen dem Verbindungsabschnitt und dem übrigen Werkzeug ausgebildet ist.

In den Rahmen der Erfindung fällt auch ein **Werkzeug,** das eine Induktionsspule, insbesondere zum Empfang von Betriebsenergie von der Spule der Werkzeugschnittstelle des Bauroboters, aufweist. Somit lassen sich auf einfache Weise drahtlos Energie, insbesondere auch eine für den Betrieb des Werkzeugs erforderliche Betriebsenergie, und bevorzugt auch Daten vom Bauroboter über die Wechselschnittstelle zum Werkzeug hin übertragen.

Unter "Werkzeug" kann ein nicht zu dem Körper des Bauroboter gehörendes Objekt verstanden werden, mit dessen Hilfe die Funktionen des Bauroboters erweitert werden, um auf diese Weise eine Bauaufgabe, beispielsweise eine Bohraufgabe, eine Trennaufgabe, eine Schleifaufgabe oder dergleichen, ausführen zu können. So kann auch unter einem Werkzeug eine elektrische Werkzeugmaschinen wie beispielsweise Maschinen zum Bohren, beispielsweise Bohrhämmer, zum Trennen, beispielsweise Sägen oder Winkelschleifer, zum Schleifen zum Markieren, zum Messen oder dergleichen verstanden werden. Insbesondere können Werkzeuge zur Bearbeitung von Gestein, beispielsweise Beton, und zur Bearbeitung von Metallen, beispielsweise von Stahl, umfasst sein.

Die Induktionsspule kann mit einem Induktionsspulenkern versehen sein. Der Induktionsspulenkern kann ein hartferritisches Material aufweisen.

Das Werkzeug kann eine Betriebsenergie entsprechend einer Leistung von mindestens 100 W, insbesondere von mindestens 1 kW, für einen ordnungsgemäßen Betrieb benötigen. Mit anderen Worten kann es sich um ein Hochleistungswerkzeug handeln. Es kann insbesondere eine elektrische Werkzeugmaschine, beispielsweise eine elektrische Handwerkzeugmaschine, sein und / oder umfassen.

Die Wechselschnittstelle kann somit insbesondere zur Nutzung mit einem Hochleistungswerkzeug, insbesondere einem Hochleistungswerkzeug zur Bearbeitung von Gestein wie beispielsweise Stahlbeton, eingerichtet sein.

Durch die drahtlose Energieübertragung können die Wechselschnittstelle und / oder das Werkzeug vollständig gekapselt sein. Insbesondere bedarf es keiner freiliegenden Steckkontakte oder dergleichen. Leistungsminderungen durch minderwertige elektrische Verbindungen, insbesondere aufgrund von Verschmutzungen oder dergleichen, können vermieden werden.

Auch können Brandrisiken aufgrund von in Steckkontakten befindlichen Fremdkörpern und durch unerwünschtes Erhitzen dieser minimiert werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: eine perspektivische Darstellung eines Bauroboters mit einer Wechselschnittstelle und einem daran angeordneten Werkzeug,
- Fig. 2: eine schematische Schnittansicht der Wechselschnittstelle mit einem daran angeordneten Verbindungsabschnitt des Werkzeugs und
- Fig. 3: eine schematische Darstellung einer alternativen Wechselschnittstelle mit einem Vibrationsdämpfer, an der ein alternativer Verbindungsabschnitt eines Werkzeugs angeordnet ist.

In der nachfolgenden Beschreibung der Figuren werden zur Erleichterung des Verständnisses der Erfindung für gleiche oder sich funktional entsprechende Elemente jeweils die gleichen Bezugszeichen verwendet.

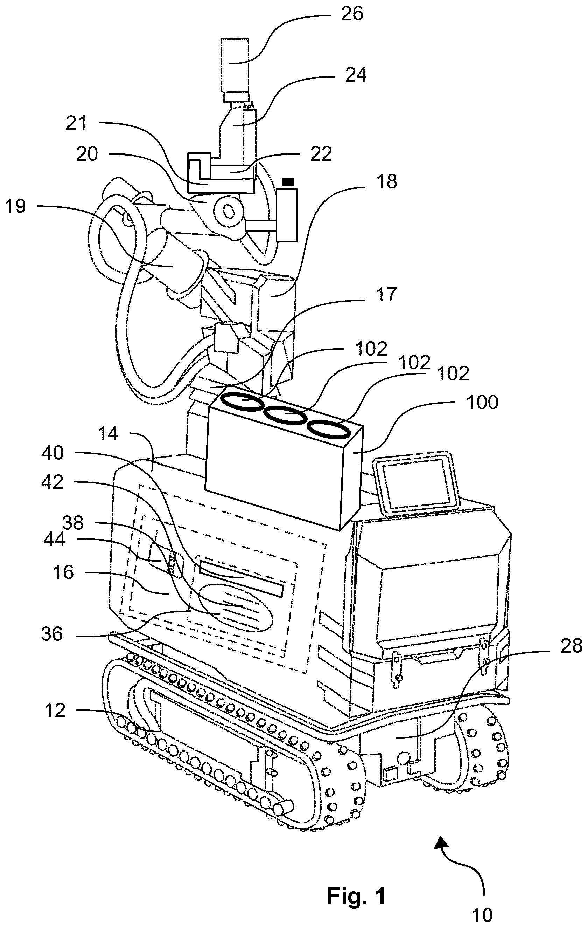

**Fig. 1** zeigt einen Bauroboter **10** mit einem als Kettenfahrwerk ausgebildeten Fahrwerk **12,** einem in einem Gehäuse **14** ausgebildeten Steuerraum **16** und einem oberseitig des Gehäuses 14 angeordneten Manipulator **18.** Der Manipulator 18 umfasst eine Hubvorrichtung **17** zur vertikalen Verlagerung und einen multiaxial steuerbaren Arm **19.**

Am freien Ende des Arms 19 befindet sich ein Endeffektor **20** mit einer Wechselschnittstelle **21.**

An der Wechselschnittstelle 21 ist ein Werkzeug **24,** insbesondere eine Gesteinsbohrwerkzeugmaschine, mit einer Staubabsaugungsvorrichtung **26,** lösbar angeordnet.

Um das Werkzeug 24 an der Wechselschnittstelle 21 lösbar anzuordnen, weist es einen Verbindungsabschnitt **22** auf.

Die Wechselschnittstelle 21 ist zur lösbaren Verbindung des Verbindungsabschnitts 22 und damit auch des Werkzeugs 24 ausgebildet.

Der Bauroboter 10 wird durch einen Speicher **28,** insbesondere in Form eines wiederaufladbaren, Lithium-basierten Akkumulators, mit Betriebsenergie versorgt. Er ist somit kabellos nutzbar.

Ferner weist der Bauroboter 10 ein Vorratsmagazin **100** auf. Das Vorratsmagazin 100 weist mehrere Ablageplätze **102** auf. An freien Ablageplätzen 102 kann das Werkzeug 24 zur Aufbewahrung und gegebenenfalls späteren Wiederverwendung abgelegt werden. Auch können weitere Elemente, beispielsweise weitere Werkzeuge, in den Ablageplätzen 102 zur späteren Verwendung aufbewahrt werden.

Der Bauroboter 10 weist, vorzugsweise innerhalb des Gehäuses 14, eine im Steuerraum 16 angeordnete Steuerung **36** auf. Die Steuerung 36 umfasst einen Speicherbaustein **38** und einen Mikroprozessor **40.**

Die Steuerung 36 ist mit ausführbarem Programmcode **42** ausgestattet. Der Programmcode 42 ist abrufbar und auf dem Mikroprozessor 40 ausführbar in dem Speicherbaustein 38 gespeichert. Über eine Kommunikationsschnittstelle **44** kann die Steuerung 36 ein Cloudbasiertes Rechnersystem (in Fig. 1 nicht dargestellt) kontaktieren und Daten, beispielsweise Daten zur Art auszuführender Bauaufgaben, zugehörige Positions- und / oder Lagedaten und / oder Steuerbefehle, austauschen.

Der Bauroboter 10 ist zur Ausführung von Bauaufgaben, beispielsweise von Bohrarbeiten in Decken und Wänden, auf einer Baustelle, insbesondere auf einer Hochbau-Baustelle, einer Tiefbau-Baustelle und / oder auf einer Stahlbau-Baustelle wie beispielsweise einer Ölplattform, ausgebildet. Insbesondere kann die Steuerung 36 den Manipulator 18 derart steuern, dass Bauarbeiten an Decken und Wänden ausführbar sind. Ein Beispiel einer solchen Bauaufgabe kann beispielsweise das Bohren eines Bohrlochs, insbesondere mit einer bestimmten Bohrtiefe und / oder einem bestimmten Bohrlochdurchmesser, in eine Betondecke mit dem als Gesteinsbohrwerkzeugmaschine ausgebildeten Werkzeug 24 sein.

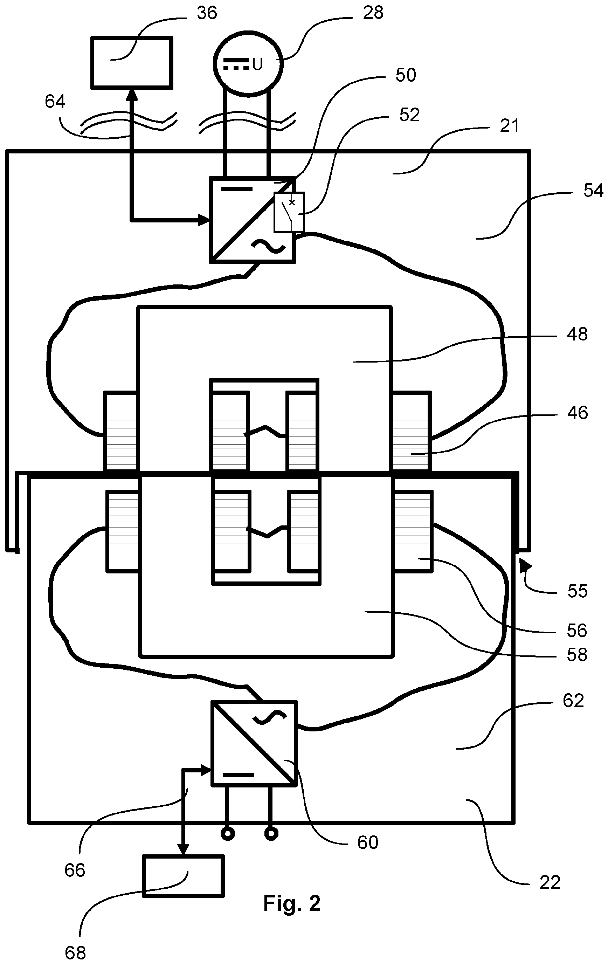

**Fig. 2** zeigt eine schematische Schnittansicht der Wechselschnittstelle 21 des vorangehend beschriebenen Bauroboters 10 (siehe Fig. 1) und den daran angeordneten Verbindungsabschnitt 22 des Werkzeugs 24 (siehe Fig. 1).

Die Wechselschnittstelle 21 weist eine Spule **46** mit einem Kern **48** auf. Die Spule 46 ist zur drahtlosen Übertragung von Betriebsenergie an das Werkzeug 24 sowie zur Datenübertragung zwischen dem Bauroboter 10 und dem Werkzeug 24 und umgekehrt eingerichtet. Insbesondere kann die Wechselschnittstelle 21 Betriebsenergie mit einer Dauerleistung von bis zu 6,6 kW übertragen.

Dazu weist die Wechselschnittstelle 21 einen DC/AC - Wandler **50** auf. Mit Hilfe mehrerer GaN-Schalter, von denen beispielhaft ein GaN-Schalter **52** in Form eines GaN-Leistungstransistors in Fig. 2 abgebildet ist und die derart in Verbindung mit weiteren passiven und aktiven Bauteilen verschaltet sind, dass eine Wechselspannung mit 100 kHz Wechselfrequenz erzeugt wird, ist die Wechselschnittstelle 21 zur Übertragung der Betriebsenergie bei einer Übertragungsfrequenz von 100 kHz eingerichtet.

Der DC/AC-Wandler 50 kann durch den Speicher 28 (siehe Fig. 1) mit Gleichstrom gespeist werden.

Die Spule 46 mitsamt dem Kern 48 ist in eine staub- und feuchtigkeitsdichte Vergussmasse **54** eingegossen und somit in diese verpackt. Insgesamt erfüllt die Wechselschnittstelle 21 eine Schutzart gemäß IP66, beispielsweise gemäß DIN EN 60529.

Der Verbindungsabschnitt 22 sitzt in einer Einbuchtung **55** der Wechselschnittstelle 21.

Erweist eine Induktionsspule **56** mit einem Induktionsspulenkern **58** auf. In der Induktionsspule 56 induzierte elektrische Energie wird über einen AC/DC-Wandler **60** zur Bereitstellung von Betriebsenergie in Form von Gleichstrom gewandelt und steht dem übrigen Werkzeug 24 zur Verfügung.

Die Induktionsspule 56, der Induktionsspulenkern 58 sowie der AC/DC-Wandler 60 sind in eine Vergussmasse **62** eingegossen. Die Vergussmasse 62 kann aus demselben Vergussmaterial bestehen wie die Vergussmasse 54 der Wechselschnittstelle 21. Auch der Verbindungsabschnitt 22 erfüllt somit die Schutzart gemäß IP66.

Der DC/AC-Wandler 50 ist über eine bidirektionale Datenverbindung **64** mit der Steuerung 36 elektrisch verbunden. Er ist eingerichtet, die von ihm erzeugte Wechselstromkomponente auf der Datenverbindung 64 ankommenden Daten entsprechend zu modulieren, sodass die Wechselschnittstelle 21 sowohl Betriebsenergie als auch Daten zum Verbindungsabschnitt 22 übertragen kann. Zudem ist er eingerichtet, aus in der Spule 46 induzierten Strömen ankommende Daten zu extrahieren, sodass diese an die Steuerung 36 über die Datenverbindung 64 übertragen werden können.

Der AC/DC-Wandler 60 ist über eine bidirektionale Datenverbindung **66** mit einer Werkzeugsteuerung **68** des Werkzeugs 24 elektrisch verbunden. Er ist über die Extraktion von Betriebsenergie für das übrige Werkzeug 24 hinaus eingerichtet, aus in der Induktionsspule 56 induzierten Wechselstrom in diesen modulierte Daten zu extrahieren und über die Datenverbindung 66 an die Werkzeugsteuerung 68 zu übertragen. Zudem ist er eingerichtet, von der Werkzeugsteuerung 68 empfangene Daten in den Wechselstrom zu modulieren, sodass auch Daten vom Werkzeug 24 zum Bauroboter 10 drahtlos, insbesondere induktiv, übertragbar sind.

Der Kern 48 und der Induktionsspulenkern 58 grenzen aneinander an, wenn das Werkzeug 24, wie in Fig. 2 schematisch dargestellt, an der Wechselschnittstelle 21 angeordnet ist.

Somit können Betriebsenergie und Daten induktiv von der Wechselschnittstelle 21 über die Spule 46 und die Induktionsspule 56 zum Verbindungsabschnitt 22 und damit zum Werkzeug 24 drahtlos übertragen werden. Auch ist eine drahtlose Datenübertragung in umgekehrter Richtung möglich.

Die drahtlose, insbesondere induktive, Übertragung ist dabei selbst dann möglich, wenn sich in der Einbuchtung 55 Staub, Schmutz und / oder Feuchtigkeit befindet. Unter anderem durch die Vergussmasse 54 ist auch eine Verwendung der Wechselschnittstelle 21 selbst in stark korrosiven Umgebungen denkbar.

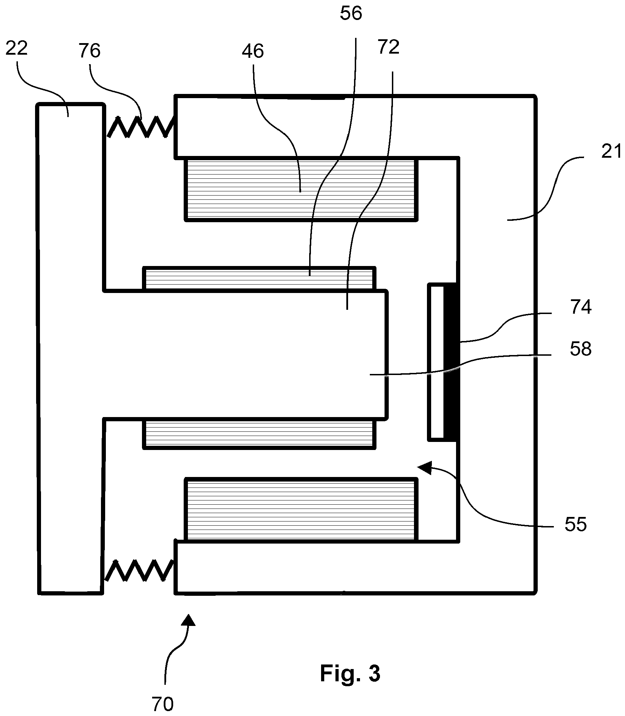

**Fig. 3** zeigt eine schematische Darstellung einer alternativen Wechselschnittstelle 21 mit einem Vibrationsdämpfer **70.** An der Wechselschnittstelle 21 ist wiederum ein Verbindungsabschnitt 22 eines Werkzeugs angeordnet.

Soweit im Folgenden nicht anderweitig beschrieben, entsprechen die Wechselschnittstelle 21 dieser Ausführungsform der vorangehend beschriebenen Ausführungsform der Wechselschnittstelle 21. Ebenso entspricht das Werkzeug, insbesondere sein Verbindungsabschnitt 22, dem vorangehend beschriebenen Werkzeug 24, insbesondere dem vorangehend beschriebenen Verbindungsabschnitt 22, soweit im Folgenden nicht anders beschrieben.

Diese Wechselschnittstelle 21 weist einen Vibrationsdämpfer 70 auf. Der Vibrationsdämpfer 70 ist eingerichtet, Vibrationen des an der Wechselschnittstelle 21 angeordneten Werkzeugs, insbesondere seines Verbindungsabschnitts 22, zum übrigen Bauroboter 10 (Fig. 1) hin, zu reduzieren.

Dazu ist die Spule 46 innen hohl ausgebildet.

Ein kolbenförmiger Abschnitt **72** des Induktionsspulenkerns 58 ragt in das Innere der Spule 46 hinein.

Die Induktionsspule 56 befindet sich außenseitig des kolbenförmigen Abschnitts 72.

Die Wechselschnittstelle 21, insbesondere ihr DC/AC-Wandler 50 (siehe auch Fig. 2), ist zusätzlich eingerichtet, die Spule 46 neben einer Wechselstromkomponente auch mit einer Gleichstromkomponente zu betreiben. Somit kann im Inneren der Spule 46 ein Konstantmagnetfeld mit einstellbarer Feldstärke, insbesondere abhängig von der Stärke der Gleichstromkomponente, zusätzlich zu einem Wechselfeld zur Übertragung von Betriebsenergie und / oder Daten erzeugt werden.

Durch das Konstantmagnetfeld kann eine Rückstellkraft erzeugt werden, welche den Verbindungsabschnitt 22, insbesondere den kolbenförmigen Abschnitt 72, in die Mitte der Spule 46 drängt. Die Rückstellkraft kann durch Veränderung der Gleichstromkomponente eingestellt werden.

Der Verbindungsabschnitt 22 ragt mit einem gewissen Spiel in die Einbuchtung 55, sodass dieser sich, zumindest in begrenztem Maße, axial innerhalb der Spule 46 bewegen kann.

Vibrationen des Verbindungsabschnitts 22 übertragen sich somit nur in reduziertem Umfang auf die Wechselschnittstelle 21.

Optional kann auch ein Permanentmagnet **74** vorgesehen sein, der eine zusätzliche Anziehungskraft auf den kolbenförmigen Abschnitt **72** ausüben kann.

Eine weitere optionale Ausgestaltung kann Federungen **76** zwischen dem Verbindungsabschnitt 22 und der übrigen Wechselschnittstelle 21 vorsehen. Die Federungen 76 können aus einem federelastischen und / oder aus einem zumindest teilweise federelastischen Material ausgebildet sein. Die Federungen 76 können beispielsweise eine Spiralfeder und / oder ein Schaummaterial aufweisen. Die Federungen 76 können eingerichtet sein, eine Vorspannung und / oder eine Abstoßung zwischen dem Verbindungsabschnitt 22 und der Wechselschnittstelle 21 zu erzeugen. Auch durch die Federungen 76 kann eine Nulllage des Verbindungsabschnitts 22 relativ zur Wechselschnittstelle 21 einstellbar sein.

Bei einer weiteren Ausgestaltung können der Permanentmagnet 74 und / oder die Federung 76 vorgesehen sein, ohne dass ein Konstantmagnetfeld erzeugt wird. Eine solche Ausgestaltung eröffnet weitere geometrische Gestaltungen; so sind beispielsweise auch Geometrien des Verbindungsabschnitts 22 und / oder der Wechselschnittstelle 21 denkbar, bei denen der Verbindungsabschnitt 22 nicht in das Innere der Spule 46 hineinragt.

### Bezugszeichenliste

- 10: Bauroboter
- 12: Fahrwerk
- 14: Gehäuse
- 16: Steuerraum
- 17: Hubvorrichtung
- 18: Manipulator
- 19: Arm
- 20: Endeffektor
- 21: Wechselschnittstelle
- 22: Verbindungsabschnitt
- 24: Werkzeug
- 26: Staubabsaugungsvorrichtung
- 28: Speicher
- 36: Steuerung
- 38: Speicherbaustein
- 40: Mikroprozessor
- 42: Programmcode
- 44: Kommunikationsschnittstelle
- 46: Spule
- 48: Kern
- 50: DC/AC-Wandler
- 52: GaN-Schalter
- 54: Vergussmasse
- 55: Einbuchtung
- 56: Induktionsspule
- 58: Induktionsspulenkern
- 60: AC/DC-Wandler
- 62: Vergussmasse
- 64: Datenverbindung
- 66: Datenverbindung
- 68: Werkzeugsteuerung
- 70: Vibrationsdämpfer
- 72: kolbenförmiger Abschnitt
- 74: Permanentmagnet
- 76: Federung
- 100: Vorratsmagazin
- 102: Ablageplatz

## Patentansprüche

1. **Bauroboter (10),** insbesondere zur Ausführung von Bauarbeiten im Hochbau, Tiefbau und / oder Stahlbau, umfassend eine Wechselschnittstelle (21) zur lösbaren Verbindung mit einem Werkzeug (24), beispielsweise einer Steinbohrwerkzeugmaschine, einer Steinmeißelwerkzeugmaschine, einem Setzgerät, insbesondere zum Setzen von Nägeln, Schrauben und / oder Dübeln in ein Gestein, einer Trennwerkzeugmaschine, beispielsweise einer Steinsägewerkzeugmaschine, einer Steinschleifwerkzeugmaschine, oder einem Greifwerkzeug,
wobei die Wechselschnittstelle (21) wenigstens eine Spule (46) zur drahtlosen Übertragung von Betriebsenergie an das Werkzeug (24) aufweist.

2. Bauroboter (10) nach dem vorhergehenden Anspruch, **dadurch gekennzeichnet, dass** die Wechselschnittstelle (21) zur Übertragung einer Dauerleistung von mindestens 100 W, besonders bevorzugt von mindestens 1 kW, und vorzugsweise von höchstens 7 kW, eingerichtet ist.

3. Bauroboter (10) nach einem der vorhergehenden Ansprüche, **dadurch gekennzeichnet, dass** die Wechselschnittstelle (21) zur Übertragung der Betriebsenergie bei einer Übertragungsfrequenz von mindestens 1 kHz, insbesondere von mindestens 100 kHz, eingerichtet ist.

4. Bauroboter (10) nach einem der vorhergehenden Ansprüche, **dadurch gekennzeichnet, dass** der Bauroboter (10), insbesondere die Wechselschnittstelle (21), wenigstens einen GaN-Schalter (52) aufweist.

5. Bauroboter (10) nach einem der vorhergehenden Ansprüche, **dadurch gekennzeichnet, dass** die Spule (46) wasser- und / oder staubdicht verpackt ist.

6. Bauroboter (10) nach einem der vorhergehenden Ansprüche, **dadurch gekennzeichnet, dass** die Wechselschnittstelle (21) einen Vibrationsdämpfer (70) aufweist, der eingerichtet ist, Vibrationen des an der Wechselschnittstelle (21) angeordneten Werkzeugs (24) zum übrigen Bauroboter (10) hin, insbesondere um mindestens 3 dB, zu reduzieren.

7. Bauroboter (10) nach einem der vorhergehenden Ansprüche, **dadurch gekennzeichnet, dass** die Wechselschnittstelle (21) eingerichtet ist, die Spule (46) mit einer Gleichstromkomponente zu betreiben.

8. Bauroboter (10) nach einem der vorhergehenden Ansprüche, **dadurch gekennzeichnet, dass** die Wechselschnittstelle (21) eingerichtet ist, die Spule (46) gleichzeitig mit einer Gleichstromkomponente und einer Wechselstromkomponente zu betreiben.

9. Bauroboter (10) nach einem der vorhergehenden Ansprüche, **dadurch gekennzeichnet, dass** die Wechselschnittstelle (21) eingerichtet ist, über die Spule (46) drahtlos sowohl die Betriebsenergie als auch Daten zu übertragen.

10. Bauroboter (10) nach einem der vorhergehenden Ansprüche, **dadurch gekennzeichnet, dass** an der Wechselschnittstelle (21) ein Permanentmagnet (74) angeordnet ist.

11. **Werkzeug (24)** für einen Bauroboter (10) nach einem der vorhergehenden Ansprüche, **dadurch gekennzeichnet, dass** das Werkzeug (24) eine Induktionsspule (56), insbesondere zum Empfang von Betriebsenergie von der Spule (46) der Werkzeugschnittstelle (21) des Bauroboters (10), aufweist.
